(19)

Europäisches
Patentamt
European
Patent Office
Office européen
des brevets

(11)  **EP 3 712 589 B1**

(12)  **EUROPEAN PATENT SPECIFICATION**

(45) Date of publication and mention
of the grant of the patent:
**10.01.2024  Bulletin 2024/02**

(21) Application number: **18916862.8**

(22) Date of filing: **08.05.2018**

(51) International Patent Classification (IPC):
***G01M 7/08*** *(2006.01)*

(52) Cooperative Patent Classification (CPC):
**G01M 7/08**

(86) International application number:
**PCT/CN2018/085937**

(87) International publication number:
**WO 2019/205189 (31.10.2019 Gazette 2019/44)**

(54) **TEST APPARATUS AND METHOD FOR KEY ROOF BLOCK COLLAPSE IN BIDIRECTIONAL STATIC-DYNAMIC LOADING**

PRÜFGERÄT UND VERFAHREN FÜR HAUPTDACHBAUSTEINZUSAMMENBRUCH BEI BIDIREKTIONALER STATISCH-DYNAMISCHER BELASTUNG

APPAREIL ET PROCÉDÉ DE TEST POUR AFFAISSEMENT DE BLOC DE TOIT CLÉ DANS UN CHARGEMENT STATIQUE-DYNAMIQUE BIDIRECTIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **23.04.2018  CN 201810367298**

(43) Date of publication of application:
**23.09.2020  Bulletin 2020/39**

(73) Proprietor: **Northeastern University
Shenyang, Liaoning 110169 (CN)**

(72) Inventors:
  • **ZHU, Wancheng
    Shenyang, Liaoning 110169 (CN)**
  • **DAI, Feng
    Shenyang, Liaoning 110169 (CN)**
  • **XU, Zenghe
    Shenyang, Liaoning 110169 (CN)**
  • **LI, Shuai
    Shenyang, Liaoning 110169 (CN)**

  • **NIU, Leilei
    Shenyang, Liaoning 110169 (CN)**
  • **CHENG, Guanwen
    Shenyang, Liaoning 110169 (CN)**
  • **LIU, Xige
    Shenyang, Liaoning 110169 (CN)**
  • **ZHANG, Penghai
    Shenyang, Liaoning 110169 (CN)**
  • **YU, Qinglei
    Shenyang, Liaoning 110169 (CN)**

(74) Representative: **ZHAOffice SPRL
Rue de Bedauwe 13
5030 Gembloux (BE)**

(56) References cited:
  CN-A- 101 936 171      CN-A- 104 266 913
  CN-A- 105 738 208      CN-A- 106 339 546
  CN-A- 106 769 484      CN-A- 107 817 119
  CN-U- 204 330 494      CN-U- 205 665 117
  SU-A1- 1 670 508

EP 3 712 589 B1

## Description

TECHNICAL FIELD

BACKGROUND OF THE INVENTION

Technical Field

The invention belongs to the technical field of early warning of mine disasters, and relates to a fall test device for testing fall of a key block in a roof and a method for testing fall of a key block in a roof based on bidirectional static-dynamic loading.

Description of Related Art

Most roof fall, as a common disaster in stope, is caused by an excessive exposure of the goaf or breakage of the roof strata, and generally occurs in the form of large-scale entire fall. As for roadways under a poor support condition, several rock blocks may fall occasionally, and this phenomenon is referred to as small-scale local fall. Regardless of the large-scale entire fall or the small-scale local fall, the instability of roof rock generally results from the instability of key blocks. The fall of the key blocks may destroy the static equilibrium of the whole rock stratum, which results in falling of other rock blocks like the domino effect in turn. Consequentially, it may cause personnel injuries or death and damage or destroy to equipment. Therefore, it is of great significance to study the instability mechanism of a key block in a roof to provide theoretical support for investigation of roof fall accidents and for early warning and prevention of the roof fall accidents.

In most cases, instability fall of the key blocks in a roof is caused by disturbances. There are many disturbances that may induce the instability of the key blocks in a roof, and blasting disturbance is the most common one that may lead to roof fall accidents. Hence, it is necessary to study the instability process of the key blocks in a roof under the disturbance of dynamic stress waves. Due to the fact that the blasting site on the mining field is not fixed and has to be changed occasionally as required by production, and even, blasting may be carried out on different sites at the same time. Therefore, it is fallacious for roadways or goafs to merely consider the stress wave disturbance in only one direction. It has become an irresistible trend to study bidirectional stress wave disturbances. Meanwhile, on account of the continuous static horizontal and vertical crustal stress applied to the roadways/goafs, the stress condition leading to the instability of the key blocks in a roof should be a bidirectional static-dynamic stress condition. Nowadays, most researches on roof fall disasters of mines are concentrated on the upper limit analysis of falling arches, the periodic roof pressure rule, and reasonable support. There have not yet been any bidirectional static-dynamic combined tests or relevant devices for instability study of the key blocks in a roof. In view of this, it is necessary to invent a corresponding test device and method to study the instability falling mechanism of the key blocks in a roof and to seek precursor information and evolution laws of the instability process to lay a theoretical foundation for disaster prevention and early warning.

Chinese patent application CN107817119 describes a impact test bench for automobile steering components and a detection method thereof. The impact test bench comprise two separate test assemblies, one assembly used for testing an automobile component clamped in a pendulum fixture with a pendulum hammer and another separate test assembly for testing an automobile component clamped in a drop hammer fixture with a drop hammer.

Chinese Patent application CN 10676948, the closest prior art, describes that once a roof fails the huge instantaneous impact force generated will induce the release of energy in the field and generate impact rock pressure. To simulate the dynamic load caused by the breaking of the roof, an impact hammer hits a railway model under static press. This prior art document is based on investigating processes after roof failure, caused by the dynamic load induced by the failure of the roof. It does not give sufficient information allowing to study the instability falling mechanism of the key blocks in a roof and to seek precursor information and evolution laws of the instability process to lay a theoretical foundation for disaster prevention and early warning.

BRIEF SUMMARY OF THE INVENTION

To solve the aforesaid technical problems, the objective of the invention is to provide a fall test device for testing fall of a key block in a roof and method based on bidirectional static-dynamic loading to study the instability falling process and mechanism of key blocks in a roof and to seek precursor information and evolution laws of the instability process to lay a theoretical foundation for disaster prevention and early warning.

The invention provides a falltest device for testing fall of a key block in a roof based on bidirectional static-dynamic loading, which comprises an overall frame, a horizontal pressure loading system, a vertical pressure loading system, a horizontal pendulum-hammer impact disturbance system, a vertical drop-hammer impact disturbance system, an incident stress wave monitoring system and a response measurement and monitoring system, wherein:

The overall frame is used to provide a reactive force and accommodate a model sample in a lower space inside a steel frame body;;

The horizontal pressure loading system is mounted on one side of the overall frame and is used to apply a horizontal static load to the model sample accommodated in the lower space inside a steel frame body;;

The vertical pressure loading system is mounted on an upper portion of the overall frame and is used to apply a vertical static load to the model sample accommodated in the lower space inside a steel frame body;

The horizontal pendulum-hammer impact disturbance system is mounted on the other side of the overall frame and applies a horizontal dynamic load to the model sample accommodated in the lower space inside a steel frame body by hitting against a horizontal incident rod;

The vertical drop-hammer impact disturbance system is mounted on the upper portion of the overall frame and applies a vertical dynamic load to the model sample accommodated in the lower space inside a steel frame body by hitting against a vertical incident rod;

The incident stress wave monitoring system is used to monitor incident stress waves on the horizontal incident rod and the vertical incident rod; and

The response measurement and monitoring system is used to realize response monitoring by recording stress state data around the key block in the roof, acoustic emission data and surface strain field data of the model sample..

According to the fall test device for testing fall of a key block in a roof based on bidirectional static-dynamic loading of the invention, the overall frame comprises a steel frame body, two centering mandrels, a horizontal sliding rail, two movable cushion blocks, two vertical sliding rails and two buffer devices;

The frame body is formed by welding an upper frame, a lower frame and two side frames, the model sample is loaded in the lower space inside the frame body, and backing plates are arranged on contact surfaces of the model sample with the horizontal pressure loading system, the horizontal pendulum-hammer impact disturbance system, the vertical pressure loading system and the vertical drop-hammer impact disturbance system;

The two centering mandrels are mounted on one side frame of the frame body through threaded rods and are used to adjust the central position of the model sample;

The horizontal sliding rail is arranged on the lower frame of the frame body, and the two movable cushion blocks are arranged on the horizontal sliding rail and are used to support the bottom of the model sample and guarantee that the horizontal stress of the model sample is uniform; and

The two vertical sliding rails are respectively arranged on the side frames above the model sample, and the two buffer devices are symmetrically arranged at the lower ends of the corresponding vertical sliding rails, respectively.

According to the fall test device for testing fall of a key block in a roof based on bidirectional static-dynamic loading of the invention, the horizontal pressure loading system is mounted on one side frame of the frame body, is disposed opposite to the centering mandrels, and comprises a horizontal hydraulic cylinder and a horizontal loading plate, wherein the horizontal loading plate is mounted on a pressure head of the horizontal hydraulic cylinder and is used to apply the horizontal static load to the model sample uniformly; and

The vertical pressure loading system is mounted on the upper frame of the frame body and comprises two vertical hydraulic cylinders and a vertical loading plate, wherein the two vertical hydraulic cylinders are symmetrically mounted on the upper frame, and the vertical loading plate is mounted on pressure heads of the two vertical hydraulic cylinders, is used to apply the vertical static load to the model sample, and has two ends mounted on the vertical sliding rails through pulleys.

According to the fall test device for testing fall of a key block in a roof based on bidirectional static-dynamic loading of the invention, the vertical drop-hammer impact disturbance system is mounted on the upper frame of the frame body and comprises a support, an electromagnetic chuck, a drop hammer, a cross beam and the vertical incident rod, wherein the drop hammer is mounted in the middle of the cross beam, the cross beam is assembled on the support and is able to slide upwards or downwards along the support to allow the drop hammer to freely and accurately fall to hit against the vertical incident rod, the vertical incident rod penetrates through the upper frame of the frame body and the vertical loading plate to act on the backing plate on the upper side of the model sample to apply the vertical hydraulic load to the model sample, the electromagnetic chuck is arranged at the upper end of the support and is used to attract the drop hammer, and the drop hammer is released by controlling a switch of the electromagnetic chuck.

According to the fall test device for testing fall of a key block in a roof based on bidirectional static-dynamic loading of the invention, the horizontal pendulum-hammer impact disturbance system is arranged on one side of the frame body, is located on the same side as the centering mandrels, and comprises a pedestal, a pendulum rod, a pendulum hammer, the horizontal incident rod, three sliding supports, an index dial and a brake valve, wherein the pendulum hammer is mounted at one end of the pendulum rod, and the other end of the pendulum rod is mounted on the pedestal; the horizontal incident rod penetrates through the corresponding side frame of the frame body to contact with the backing plate on one side of the model sample; the pendulum rod is manually lifted, the brake valve is locked to fix the pendulum height, and then the brake valve is unlocked to release the pendulum rod, so that the pendulum hammer hits against the horizontal incident rod to generate horizontally propagating impact stress waves to apply the horizontal dynamic load to the model sample; and the sliding support supports the horizontal incident rod, and the index dial is arranged at the top of the pedestal and is used to quantitatively determine impact energy of the pendulum hammer.

According to the fall test device for testing fall of a key block in a roof based on bidirectional static-dynamic loading of the invention, the response measurement and monitoring system comprises one or more laser displacement meters, one or more strain acquisition instruments, one or more pressure cell sensors, one or more optical-fiber tensile stress sensors, one or more two-dimensional speckle strain measurement systems, one or more acoustic emission signal acquisition devices, and one or more BOTDR distributed optical-fiber strain testers.

The invention further provides a fall test method for testing fall of a key block in a roof based on bidirectional static-dynamic loading, which comprises the following steps:

Step 1: constructing an overall roadway model sample according to the investigated field condition and similarity theory, and calculating a boundary force condition of the overall roadway model sample according to an original crustal stress;

Step 2: placing the overall roadway model sample into an overall frame, and applying a horizontal static load and a vertical static load to the overall roadway model sample by a horizontal pressure loading system and a vertical pressure loading system according to the boundary force condition;

Step 3: repeatedly and cyclically applying dynamic loads to the overall roadway model sample by a horizontal pendulum-hammer impact disturbance system and a vertical drop-hammer impact disturbance system, recording an incident stress waveform by an incident stress wave monitoring system, and recording stress state data around a key block, acoustic emission data and surface strain field data of the model sample by a response measurement and monitoring system; and observing the crack propagation rule, the formation process of the key block, the instability sliding process of the key block, and the roadway destroy mode under the dynamic disturbance;

Step 4: stopping the application of the dynamic loads when the key block in the roof is destroyed or falls, and analyzing initial stress conditions of a roadway and a key block according to the recoded stress state data around the key block; and analyzing the crack propagation process of the key block in the roof according to the recorded incident stress waveform, acoustic emission data and surface strain field data;

Step 5: constructing a key block model sample according to the investigated field condition and the similarity theory;

Step 6: placing the key block model sample into the overall frame, and applying a horizontal static load and a vertical static load to the key block model sample by the horizontal pressure loading system and the vertical pressure loading system, with the initial stress condition of the key block in the roof obtained in Step 4 as the boundary force condition of the key block model sample;

Step 7: repeatedly and cyclically applying dynamic loads to the key block model sample by the horizontal pendulum-hammer impact disturbance system and the vertical drop-hammer impact disturbance system, recording an incident waveform by the incident stress wave monitoring system, and recording various monitoring data by the response measurement and monitoring system; and observing the crack propagation rule of the key block and the instability sliding process after crack coalescence; and

Step 8: stopping the application of the dynamic loads when the key block in the roof is destroyed or falls, analyzing the action mechanism of impact disturbances leading to instability sliding of the key block, according to the recorded monitoring data, observing the data changes, analyzing the change rule, and seeking the critical instability condition and precursor information of the key block.

According to the fall test method for testing fall of a key block in a roof based on bidirectional static-dynamic loading of the invention, the response measurement and monitoring system comprises one or more laser displacement meters, one or more strain acquisition instruments, one or more pressure cell sensors, one or more optical-fiber tensile stress sensors, one or more two-dimensional speckle strain measurement systems, one or more acoustic emission signal acquisition devices, and one or more BOTDR distributed optical-fiber strain testers.

According to the fall test method for testing fall of a key block in a roof based on bidirectional static-dynamic loading of the invention, the construction of the overall roadway model sample in Step 1 specifically comprises:

Step 1.1: defining an appropriate simulation scope according to the investigated field condition, determining a dimension similarity ratio, a strength similarity ratio, a density similarity ratio and a stress similarity ratio according to the similarity theory, and calculating the dimension, density and strength of the test model;

Step 1.2: selecting an appropriate similar material according to the calculated model density and model strength, and selecting an optimum similar material formula and curing method by multiple orthogonal experimental comparisons;

Step 1.3: manufacturing the overall roadway model sample according to the obtained model dimension and similar material formula, wherein the specific manufacturing process includes: ① erecting a square model, and disposing a roadway partition in the middle of the model; ② preparing and pouring similar material slurry according to the selected optimum similar material formula; ③ inserting thin iron sheets into a roadway roof according to a pre-determined shape and dimension of the key block to pre-form roof cracks; ④ embedding the pressure cell sensors around the key block; ⑤ curing a similar model according to the optimum curing method, and pulling the thin iron sheet out of the roadway roof after initial setting is finished; and ⑥ continuing to cure the similar model to an expected strength; and Step 1.4: calculating the boundary force condition of the overall roadway model sample according to the original crustal stress and the stress similarity ratio.

According to the fall test method for testing fall of a key block in a roof based on bidirectional static-dynamic loading of the invention, the construction of the key block model sample in Step 5 specifically comprises:

Step 5.1: scaling up the dimension similarity ratio on the basis of the similarity theory, simulating the local scope of the key block, and determining an appropriate key block model sample dimension; and

Step 5.2: manufacturing the trapezoidal key block model sample according to the key block model sample dimension, wherein the specific manufacturing process includes: ① erecting a template, and prearranging two non-through thin iron sheets at pre-determined positions; ② preparing and pouring similar material slurry according to the selected optimum similar material formula; ③ embedding the optical-fiber tensile stress sensors and the pressure cell sensors around the key block, embedding a distributed optical fiber in the bottom of the model, consolidating the similar material slurry by vibration, and flattening the surface; ④ curing the similar material slurry in an appropriate environment according to the optimum curing method; (5) pulling out the thin iron sheet used for pre-cracking after the similar material is initially set; and 06 continuing to cure the similar material to an expected strength.

The fall test device and method for testing fall of a key block in a roof based on bidirectional static-dynamic loading of the invention at least have the following beneficial effects:

(1) The invention carries out a research on roof fall accidents based on the view that roof fall is caused by key block instability, and it is suitable for studying most roof fall accidents.

(2) The invention not only observes and studies the key block instability process from an overall perspective of roadways, but also deeply studies precursor information of key block instability from a local perspective of key blocks, and the development law of instability falling of the key blocks can be analyzed according to the experiment phenomena and monitoring data.

(3) The invention takes bidirectional dynamic disturbances into consideration, thus being more adaptable to the situation where the roadway roof suffers from bidirectional dynamic disturbances due to the unfixed blasting site in the field and the possibility of synchronous blasting on different sites.

(4) The invention adopts bidirectional static-dynamic loading, thus being more adaptable to the situation wherein the key block in the roof of the roadway is subjected to the crustal stress and the blasting disturbance at the same time.

(5) The pendulum-hammer impact and drop-hammer impact provided by the invention can create an accurate and controllable bidirectional dynamic disturbance condition.

BRIEF DESCRIPTION OF THE SEVERAL VIEWS OF THE DRAWINGS

FIG. 1 is a structural diagram of a fall test device for testing fall of a key block in a roof based on bidirectional static-dynamic loading of the invention;
FIG. 2 is a structural diagram of a safety isolation barrier of the invention;
FIG. 3 is a structural diagram of a sample pre-installation auxiliary frame of the invention;
FIG. 4 is a test diagram of a fall test method for testing fall of a key block in a roof based on bidirectional static-dynamic loading in a first working condition of the invention;
FIG. 5 is a schematic diagram of auxiliary installation of a key block sample by means of the sample pre-installation auxiliary frame in a second working condition.

DETAILED DESCRIPTION OF THE INVENTION

A fall test device and method for testing fall of a key block in a roof based on bidirectional static-dynamic loading of the invention are expounded below with reference to the accompanying drawings.

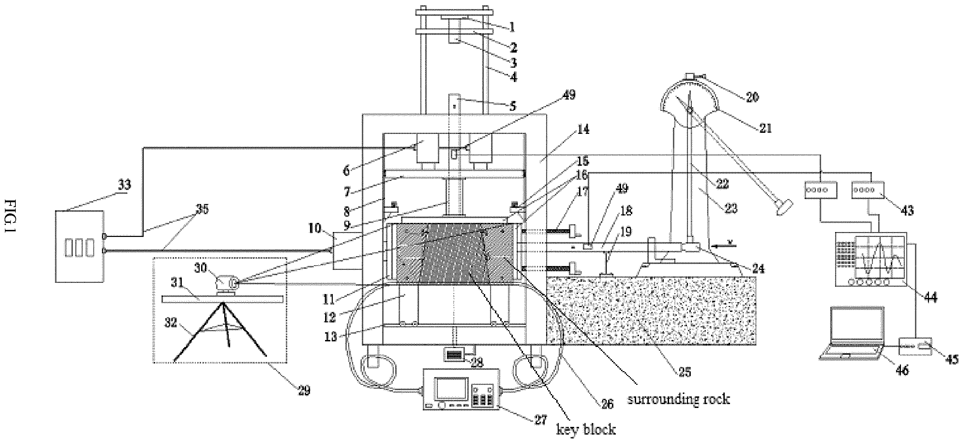

As shown in FIG. 1, the fall test device for testing fall of a key block in a roof based on bidirectional static-dynamic loading comprises an overall frame, a horizontal pressure loading system, a vertical pressure loading system, a horizontal pendulum-hammer impact disturbance system, a vertical drop-hammer impact disturbance system, an incident stress wave monitoring system, a response measurement and monitoring system and a hydraulic power system 33.

The overall frame is used to carry other systems, provide a reactive force and accommodate a model sample, and comprises a steel frame body 14, two centering mandrels 17, a horizontal sliding rail 13, two movable cushion blocks 12, two vertical sliding rails 8 and two buffer devices 15. The frame body 14 is formed by welding an upper frame, a lower frame and two side frames, and through holes and threaded holes are reserved as required. The model sample is loaded in a lower space inside the frame body 14, and backing plates 16 are arranged on contact surfaces of the model sample with the horizontal pressure loading system, the vertical pressure loading system, the horizontal pendulum-hammer impact disturbance system and the vertical drop-hammer impact disturbance system. The two centering mandrels 17 are mounted on one side frame of the frame body 14 through threaded rods and are used to adjust the central position of the model sample. In this embodiment, the two centering mandrels 17 are arranged on the right side frame of the frame body 14. The horizontal sliding rail 13 is mounted on the lower frame of the frame body 14 through bolts, and the two movable cushion blocks 12 are arranged on the horizontal sliding rail 13 and are used to support the bottom of the model sample and guarantee that the horizontal stress of the model sample is uniform, so that when a key block instability test is carried out, surrounding rock blocks on the two sides of a key block model sample can horizontally move freely. The two vertical sliding rails 8 are respectively arranged on the side frames above the model sample and can maintain horizontal movement and descending of a vertical loading plate 7 of the vertical pressure loading system. The two buffer devices 15 are symmetrically arranged at the lower ends of the corresponding vertical sliding rails 8, respectively and can effectively reduce an impact of the vertical loading plate 7 after the sample is destroyed or loses stability.

The horizontal pressure loading system is mounted on one side of the overall frame and is used to apply a horizontal static load to the model sample. The horizontal pressure loading system is mounted on one side frame of the frame body 14, isdisposed opposite to the centering mandrels 17, and comprises a horizontal hydraulic cylinder 10 and a horizontal loading plate 11; in this embodiment, the horizontal hydraulic cylinder 10 is mounted on the left side frame of the frame body 14 to provide the horizontal static load; and the horizontal loading plate 11 is mounted on a pressure head of the horizontal hydraulic cylinder 10 and is used to apply the horizontal static load to the model sample and to change the force application area. A high-pressure oil pipe 35 of the hydraulic power system 33 is connected to the horizontal hydraulic cylinder 10 to provide power for the horizontal hydraulic cylinder 10.

The vertical pressure loading system is mounted on an upper portion of the overall frame and is used to apply a vertical static load to the model sample. The vertical pressure loading system is mounted on the upper frame of the frame body 14 and comprises two vertical hydraulic cylinders 6 and a vertical loading plate 7, wherein the two vertical hydraulic cylinders 6 are symmetrically mounted on the upper frame and are symmetrically disposed on two sides of a vertical incident rod 5 of the vertical drop-hammer impact disturbance system; and the vertical loading plate 7 is mounted on pressure heads of the two vertical hydraulic cylinders 6, has two ends mounted on the vertical sliding rails 8 through pulleys, and is able to transmit the vertical static load to the model sample without generating any torque in the loading process. A high-pressure oil pipe 35 of the hydraulic power system 33 is connected to the two vertical hydraulic cylinders 6 to provide power for the vertical hydraulic cylinders 6.

The vertical drop-hammer impact disturbance system is mounted on the upper portion of the overall frame and applies a vertical dynamic load to the sample model by hitting against the vertical incident rod 5. The vertical drop-hammer impact disturbance system is mounted on the upper frame of the frame body 14 and comprises a support 4, an electromagnetic chuck 1, a drop hammer 3, a cross beam 2 and the vertical incident rod 5, wherein the drop hammer 3 is mounted in the middle of the cross beam 2, and the cross beam 2 is assembled on the support 4 and is able to slide upwards or downwards along the support 4 to allow the drop hammer 3 to accurately and freely fall to hit against the vertical incident rod 5; the vertical incident rod 5 penetrates through the upper frame of the frame body 14 and the vertical loading plate 7 to act on the backing plate 16 on the upper side of the model sample to apply the vertical dynamic load to the model sample; and the electromagnetic chuck 1 is arranged at the upper end of the support 4 and is used to attract the drop hammer 3, and a switch of the electromagnetic chuck 1 can be controlled to release the drop hammer 3.

The horizontal pendulum-hammer impact disturbance system is mounted on the other side of the overall frame and applies a horizontal dynamic load to the model sample by hitting against a horizontal incident rod 19. The horizontal pendulum-hammer impact disturbance system is arranged on one side of the frame body 14, is located on the same side as the centering mandrels 17, and comprises a pedestal 23, a pendulum rod 22, a pendulum hammer 24, a horizontal incident rod 19, three sliding supports 18, an index dial 21 and a brake valve 20, wherein the pendulum hammer 24 is mounted at one end of the pendulum rod 22, and the other end of the pendulum rod 22 is mounted on the pedestal 23; the horizontal incident rod 19 penetrates through the corresponding side frame of the frame body 14 to contact with the backing plate 16 on the corresponding side of the model sample; the pendulum rod 22 is manually lifted, the brake valve 20 is locked to fix the pendulum height, and then the brake valve 20 is unlocked to release the pendulum rod 22, so that the pendulum hammer 24 hits against the horizontal incident rod 19 to generate horizontally propagating impact stress waves to apply the horizontal dynamic load to the model sample; the sliding support 18 supports the horizontal incident rod 19, the index dial 21 is arranged at the top of the pedestal 23 and is used to quantitatively determine the impact energy of the pendulum hammer 24, and the brake valve 20 is used to control the release of the pendulum rod 22; and the pedestal 23 and the sliding support 18 are both mounted on a concrete base 25.

The incident stress wave monitoring system is used to monitor incident stress waves on the horizontal incident rod 19 and the vertical incident rod 5 and comprises strain gauges 49, a signal amplifier 43, an oscilloscope 44, a switchboard 45 and a computer 46, wherein the strain gauges 49 are respectively pasted on the horizontal incident rod 19 and the vertical incident rod 5 to form a full-bridge circuit and are used to monitor the incident stress waves on the horizontal incident rod 19 and the vertical incident rod 5; the signal amplifier 43 is connected between the oscilloscope 44 and the strain gauge 49 circuit and is used to amplify original signals of the strain gauges; the oscilloscope 44 is used to collect and record voltage signals of the strain gauges; and the computer 46 is used to store and analyze the voltage signals of the strain gauges and convert the voltage signals into stress wave signals.

The response measurement and monitoring system is used to realize various types of response monitoring, including surface fixed-point displacement monitoring, surface fixed-point strain monitoring, internal fixed-point pressure monitoring, surface strain/displacement field monitoring, acoustic emission monitoring, surface displacement monitoring, and the like, and the specific test method will be described below. The response measurement and monitoring system comprises one or more laser displacement meters 28, one or more strain acquisition instruments, one or more pressure cell sensors, one or more optical-fiber tensile stress sensors, one or more two-dimensional speckle strain measurement systems, and one or more acoustic emission signal acquisition devices consisting of acoustic emission probes and acoustic emission signal acquisition instruments, distributed optical fibers 26, and BOTDR distributed optical-fiber strain testers 27. Part of these devices is not shown in the figures.

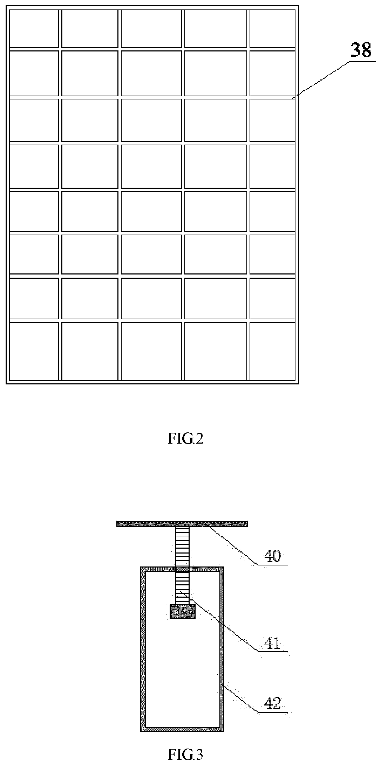

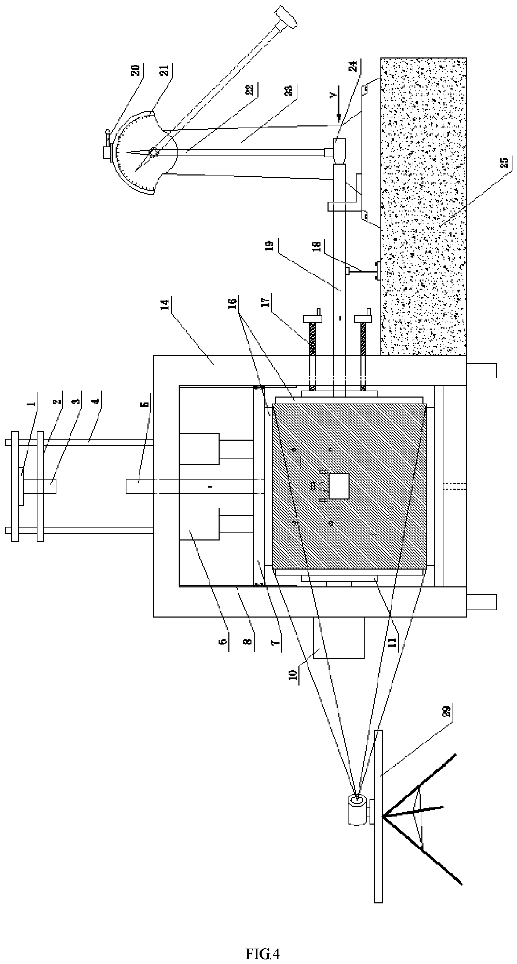

As shown in FIG. 2, FIG. 3 and FIG. 4, the test device further comprises safety isolation barriers 38, a vertical load transfer sleeve 9, a sample pre-installation auxiliary frame 39 and backing plates 16, wherein the safety isolation barriers 38 are mounted on the front side and the back side of the frame body 14 and are used to isolate a test system from workers to guarantee the safety of the workers in the test process; the vertical load transfer sleeve 9 is used to extend the transfer distance of a vertical pressure in the case of insufficient stroke of the pressure heads of the vertical hydraulic cylinders 6; the sample pre-installation auxiliary frame 39 consists of a support plate 40, a lifting adjustment bolt 41 and a steel frame 42, is used for auxiliary installation of a middle key block sample, is located below the frame body 14 to support the middle key block sample, and is removed after all samples are installed and clamped; and the backing plates 16 are disposed between the horizontal loading plate 11 and the sample as well as between the vertical loading plate 7 and the sample, and are used to change the load application area.

The impact of earthquakes and blasting disturbances on the key block is mainly reflected in the influence of the propagation of blasting stress waves. The vertical drop-hammer impact disturbance system can simulate vertical stress waves propagating from top to bottom in the roof, and the horizontal pendulum-hammer impact disturbance system can simulate horizontal stress waves propagating from right to left in the surrounding rock, so that the influence of stress wave disturbances in different directions on the stability of the key block are studied.

In order to investigate the rock crack propagation and instability falling process of a key block in a roof of a roadway/goaf, first of all, it is necessary to acquire the stress state of surrounding rock around the roadway/goaf and to analyze the stress condition of the key block in the roof. On this basis, an experimental investigation about the stability of the key block is carried out independently. Hence, the test method of the invention includes two working conditions. First working condition: a bidirectional static-dynamic loading disturbance test of an overall roadway model sample, as shown in FIG. 1, wherein this test is carried out to explore the initial stress state of surrounding rock around the roadway/goaf and the initial stress condition of key block in the roof and observe the crack propagation rule, the formation process and the instability process of the key block in the disturbance process.

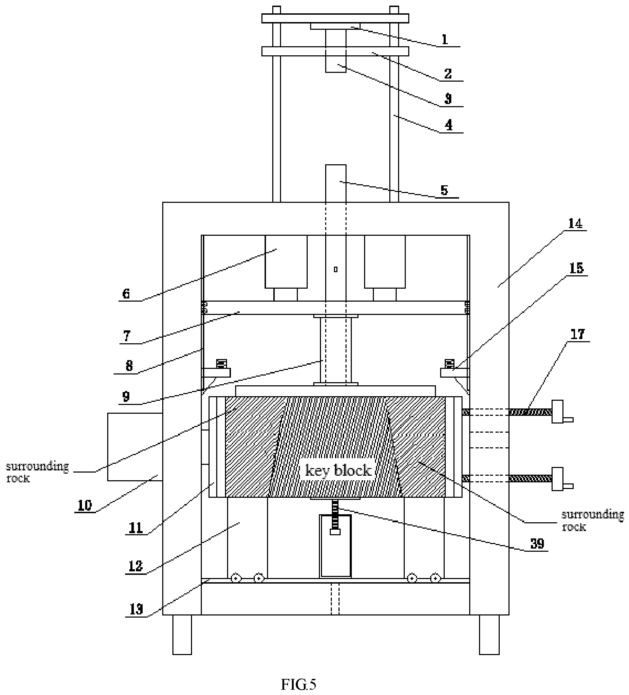

Second working condition: a bidirectional static-dynamic loading disturbance instability test of a key block in a roof model sample, shown in FIG. 5, wherein on the basis of test results of the first working condition, the key block in the roof and the surrounding block on both sides are abstracted to carry out the bidirectional static-dynamic loading disturbance test to more accurately explore the rule of crack propagation caused by stress waves, the critical condition of instability sliding of the key block, and the action mechanism of instability caused by disturbances, to seek precursor information of instability falling through various monitoring approaches, and to test the viability of a distributed optical fiber in monitoring the instability sliding process of the key block rock.

The fall test method for testing fall of a key block in a roof based on bidirectional static-dynamic loading of the invention is detailed below. The test method specifically comprises the following eight steps, wherein Steps 1-4 are performed in the first working condition: bidirectional static-dynamic loading disturbance test of the overall roadway model sample.

The bidirectional static-dynamic loading disturbance test of the overall roadway model sample is carried out to explore the initial stress state of the surrounding rock around the roadway/goaf and the initial stress condition of the key block in the roof, and to observe the crack propagation rule, the formation process and the instability sliding process of the key block. This test specifically includes:

Step 1: an overall roadway model sample is constructed according to the investigated field condition and the similarity theory, and the boundary force condition of the overall roadway model sample is calculated according to the original crustal stress, wherein the construction of the overall roadway model sample in Step 1 specifically includes:

Step 1.1: an appropriate simulation scope is defined according to the investigated field condition, a dimension similarity ratio $C_l$, a strength similarity ratio $C_{UCS}$, a density similarity ratio $C_\rho$ and a stress similarity ratio $C_\sigma$ are determined according to the similarity theory, and a model dimension, a model density and a model strength are calculated;

Wherein, the similar condition of the similarity theory is:

$$\frac{C_\sigma}{C_l \cdot C_\rho} = 1$$

Step 1.2: an appropriate similar material is selected according to the calculated model density and model strength, and an optimum similar material formula and an optimum curing method are selected by multiple orthogonal experimental comparisons;

In a specific implementation, the appropriate similar material is researched based on similarity ratio parameters determined by the similarity theory. With reference to former research achievements, common similar materials (quartz sand, cement, gypsum, water reducer, set retarder, and the like) are adopted, and an appropriate similar material preparation formula and an appropriate curing method are sought by orthogonal experiments.

Step 1.3: the overall roadway model sample is manufactured according to the obtained model dimension and similar material formula, wherein the manufacturing process includes: ① a square model is erected, and a roadway partition is disposed in the middle of the model; ② similar material slurry is prepared and poured according to the selected optimum similar material formula; ③ thin iron sheets are inserted into a roadway roof according to a pre-determined key block shape and dimension to pre-form roof cracks; ④ one or more pressure cell sensors are embedded around the key block; ⑤ a similar model is cured according to the optimum curing method, and the thin iron sheet is pulled out of the roadway roof after initial setting is finished; and ⑥ the similar model continues to be cured to an expected strength;

Step 1.4: the boundary force condition of the overall roadway model sample is calculated according to the original crustal stress and the stress similarity ratio;

Step 2: the overall roadway model sample is placed in an overall frame, and a horizontal static load and a vertical static load are applied to the overall roadway model sample by a horizontal pressure loading system and a vertical pressure loading system according to the calculated boundary force condition;

In a specific implementation, movable cushion blocks 12, a horizontal rail 13 and buffer devices 15 are removed at first, then the manufactured overall roadway model sample is correctly placed in a frame body 14, and several appropriate backing plates 16 are disposed on the surface of the sample, centering mandrels 17 are adjusted to make the model in the central position both in the vertical direction and horizontal direction. After that, the incident stress wave monitoring system and a response measurement and monitoring system are configured specifically as follows:

Configuration of the incident stress wave monitoring system: strain gauges 49 are respectively pasted on a horizontal incident rod 19 and a vertical incident rod 5 to form a full-bridge circuit and are used to monitor the stress wave on the horizontal incident rod 19 and the vertical incident rod 5; the strain gauge 49 circuit is connected to a signal amplifier 43 which is used to amplify original signals of the strain gauges 49, and then an output terminal of the signal amplifier 43 is connected to an oscilloscope 44 which is used to collect and record voltage signals of the strain gauges; after that, the an output terminal of the oscilloscope 44 is connected to a computer 46 which is used to store and analyze the voltage signals of the strain gauges 49 and to convert the voltage signals into stress wave signals.

Configuration of the response measurement and monitoring system: when the static-dynamic loading disturbance test of the overall roadway model sample is carried out, three devices, namely acoustic emission signal acquisition devices, pressure cell sensors and two-dimensional speckle strain measurement systems 29, of the response measurement and monitoring system are used. ① Acoustic emission monitoring: several acoustic emission probes are fixed on the surface of the model sample and close to the key block with a special adhesive, signal lines and power lines of the probes are connected to an acoustic emission signal acquisition and analysis instrument, and then the circuit is checked to eliminate abnormalities; an acoustic emission hit threshold, a sampling frequency and a storage path are set, after that, the acquisition can be started; in this way, the crack propagation rule can be monitored during the test. ② Internal pressure monitoring: signal lines and power lines of the pressure cell sensors pre-embedded in the sample are connected to a pressure signal acquisition instrument, which is in turn connected to the computer;

a sampling frequency and a storage path are set, data are cleared, the acquisition instrument is turned on, the pressure signal state is observed, and the circuit is checked to eliminate abnormalities; and in this way, the stress state around the key block can be monitored. ③ Speckle surface strain monitoring: the front surface (unobstructed surface) of the model is sprayed with calibration speckle spots; the two-dimensional speckle strain measurement systems are disposed on the front side of the model by erecting a tripod 32, adjusting a camera sliding rail 31 to be horizontal and installing a high-speed high-definition camera 30; the camera is rotated and horizontally moved to be aligned to the testing area, and the aperture and focal length are adjusted to ensure that the whole model is within the coverage of the camera and that an image is clear; the camera is connected to the computer, speckle analysis software is started, and a shooting time interval is set; and in this way, the field changes of strain within the whole surface of the model can be monitored.

After the incident stress wave monitoring system and the response measurement and monitoring system are configured, front and back safety barriers 38 are closed, a hydraulic power system 33 is started, a horizontal static load and a vertical static load are applied to the overall roadway model sample by the horizontal pressure loading system and the vertical pressure loading system according to the boundary force condition, power is supplied to a horizontal hydraulic cylinder 10 and vertical hydraulic cylinders 6 by means of high-pressure oil pipes 35 to increase the horizontal static load and the vertical static load to preset load values (namely the boundary force condition), and then the horizontal static load and the vertical static load are maintained at the preset load values.

Step 3: dynamic loads are repeatedly and cyclically applied to the overall roadway model sample by a horizontal pendulum-hammer impact disturbance system and vertical drop-hammer impact disturbance system, an incident stress waveform is recorded by the incident stress wave monitoring system, and stress state data around the key block, acoustic emission data and surface strain field data of the overall roadway model sample are recorded by the response measurement and monitoring system; and the crack propagation rule, the formation process and instability sliding process of the key block, and the roadway destroy mode are observed in the disturbance process.

In a specific implementation, a vertical impact disturbance mode, a horizontal impact disturbance mode, or a horizontal-vertical impact disturbance mode can be adopted according to the studied issue. The appropriate drop hammer 3 and pendulum hammer 24 are selected according to the characteristics (energy, rising edge time, amplitude, and the like) of disturbance stress waves, the heights of the drop hammer 3 and the pendulum hammer 24 are adjusted according to a required impact speed, and an electromagnetic chuck 1 and a brake valve 20 are controlled to release the drop hammer 3 and the pendulum hammer 24 to carry out impact disturbances.

Step 4: the dynamic loads are stopped when the key block in the roof is destroyed or falls, and initial stress conditions of a roadway and a key block of the overall roadway model sample are analyzed according to the recorded stress state data around the key block; and the crack propagation process of the key block in the roof is analyzed according to the recorded incident stress waveform, acoustic emission data and surface strain field data;

In a specific implementation, the test is over when the key block in the roof is destroyed or falls. The horizontal and vertical loads are decreased to zero by the hydraulic power system 33; the safety barriers 38 are opened, the vertical incident rod 5 and the backing plate 16 are disassembled, the destroyed model sample is removed, the test device is cleaned, and all facilities are restored to the original states before the test. In the static loading and dynamic disturbing process, the crack propagation rule, the formation process of the key block, the instability sliding process of the key block, and the roadway destroy mode are observed; the stress state data around the key block, the acoustic emission data and the surface strain field data are collected and recorded; and the initial stress conditions of the roadway and the key block are analyzed according to the recorded stress data and strain data, and the crack propagation process of the key block is analyzed according to recorded acoustic emission signals.

Steps 5-8 are performed in the second working condition: bidirectional static-dynamic loading disturbance test of the key block model sample.

As shown in FIG. 1, by carrying out a disturbance instability sliding test on the key block model sample, the crack propagation and instability sliding process of the key block under dynamic disturbances can be studies more accurately and specifically, the crack propagation process of the key block in the roof caused by stress waves, the critical condition of instability sliding of the key block, the action mechanism of instability caused by disturbances, and precursor information of instability falling can be exploded; and meanwhile, the validity and stability of the monitoring approach based on a distributed optical fiber are tested to provide reference for field application. This test specifically includes:

Step 5: a key block model sample is constructed according to the investigated field condition and the similarity theory, wherein the construction of the key block model sample in Step 5 specifically includes:

Step 5.1: the dimension similarity ratio is scaled up on the basis of the similarity theory, the local scope of the key block is simulated, and an appropriate key block model sample dimension is determined;

Step 5.2: the trapezoidal model sample is manufactured according to the key block model sample dimension, wherein the specific manufacturing process includes: ① a template is erected, and two non-through thin iron sheets are pre-arranged at pre-determined positions; ② similar material slurry is prepared and poured according to the selected optimum similar material formula; ③ optical-fiber tensile stress sensors and pressure cell sensors are embedded around the key block, a distributed optical fiber is embedded in the bottom of the model, the similar material slurry is consolidated by vibration, and the surface is flattened; ④ the similar material slurry is cured in an appropriate environment through the optimum method; ⑤ the thin iron sheet used for pre-cracking is pulled out after the similar material is initially set; and ⑥ the similar material continues to be cured to an expected strength.

Step 6: the key block model sample is placed in the overall frame, and with the initial stress condition of the key block rock obtained in Step 4 as the boundary force condition of the key block model sample, a horizontal static load and a vertical static load are applied to the key block model sample by the horizontal pressure loading system and the vertical pressure loading system;

In a specific implementation, the safety barriers 38 are opened, the horizontal rail 13, the movable cushion blocks 12, and the buffer devices 15 are installed, a sample pre-installation auxiliary frame 39 is erected, then the manufactured key block model sample is correctly placed in the frame body 14, the appropriate backing plate 16 is disposed on the surface of the sample, the centering mandrels 17 are adjusted to adjust the model to the central position both in the vertical direction and in the horizontal direction, and afterwards, the incident stress wave monitoring system and the response measurement and monitoring system are configured specifically as follows:

The incident stress wave monitoring system can be configured with reference to the first working condition and will not be described anymore herein.

Configuration of the response measurement and monitoring system: when the static-dynamic loading disturbance test of the key block model sample is carried out, six devices, namely acoustic emission signal acquisition devices, pressure cell sensors, optical-fiber tensile stress sensors, BOTDR distributed optical-fiber strain testers 27, laser displacement meters 28 and two-dimensional speckle strain measurement systems 29, of the response measurement and monitoring system are used. ① Acoustic emission monitoring: several acoustic emission probes are fixed on the surface of the model sample and close to the key block with a special adhesive, signal lines and power lines of the probes are connected to an acoustic emission signal acquisition and analysis instrument, and the circuit is checked to eliminate abnormalities; an acoustic emission hit threshold, a sampling frequency and a storage path are set, and then acquisition is started; and in this way, the crack propagation rule can be monitored during the test. ② Pressure monitoring of internal crack surfaces: signal lines and power lines of the pressure cell sensors pre-embedded in the sample are connected to a pressure signal acquisition instrument, which is in turn connected to a computer; a sampling frequency and a storage path are set, data is cleared, the acquisition instrument is turned on, and the pressure signal state is observed, and the circuit is checked to eliminate abnormalities; and in this way, the stress state around the key block is monitored. ③ Tensile stress monitoring of internal crack propagation: the optical-fiber tensile stress sensors embedded in the predicted crack propagation path are connected to an optical fiber emitter and an optical fiber demodulator; the circuit is checked to eliminate abnormalities; and the tensile stress changes on the crack propagation path are monitored in the crack propagation process. ④ Distributed optical fiber strain monitoring: the distributed optical fiber 26 embedded in the bottom is connected to the BOTDR optical-fiber strain tester 27, the circuit is checked to eliminate abnormalities, and changes of the relative displacement between the key block and the surrounding rock in the downward sliding process of the key block are monitored. ⑤ Fixed-point displacement monitoring with the laser displacement meters: the laser displacement meters 28 are fixed to the bottom of the overall frame through an electromagnetic frame, and the laser is irradiated to the center of the bottom surface of the key block via a reserved hole; the laser displacement meters are connected to the computer, the circuit is checked to eliminate abnormalities, a sampling frequency and a storage path are set, and acquisition is started; and in this way, displacement changes of the central point of the bottom surface in the downward sliding process of the key block are monitored. ⑥ Speckle surface strain monitoring: the front surface (unobstructed surface) of the model is sprayed with calibration speckle spots; the two-dimensional speckle strain measurement systems are disposed on the front side of the model by erecting a tripod 32, adjusting a camera sliding rail 31 to be horizontal and installing a high-speed high-definition camera 30; the camera is rotated and horizontally moved to be aligned to the testing area, and the aperture and focal length are adjusted to ensure that the whole model is within the coverage of the camera and that an image is clear; and the camera is connected to the computer, speckle analysis software is started, and a shooting time interval is set; and in this way, the field changes of strain within the whole surface of the model are monitored.

After the incident stress wave monitoring system and the response measurement and monitoring system are configured, vertical and horizontal boundary loads are determined according to the stress state around the key block obtained in the first working condition. The front and back safety barriers 38 are closed, the hydraulic power system 33 is started, power is supplied to the horizontal hydraulic cylinder 10 by means of a high-pressure oil pipe 35 to increase the horizontal static load to a preset load value, then the horizontal static load is maintained at the preset load value, and the sample pre-installation auxiliary frame 39 is removed; and power is supplied to the vertical hydraulic cylinders 6 by means of a high-pressure oil pipe 35 to increase the vertical static load to a preset load value, and then the vertical static load is maintained at the preset load value.

Step 7: dynamic loads are repeatedly and cyclically applied to the key block model sample by the horizontal pendulum-hammer impact disturbance system and the vertical drop-hammer impact disturbance system, an incident waveform is recorded by the incident stress wave monitoring system, and monitoring data is recorded by the response measurement and monitoring system; and the crack propagation rule of the key block and the instability sliding process after crack coalescence are observed;

In a specific implementation, a vertical impact disturbance mode, horizontal impact disturbance mode, or a horizontal-vertical impact disturbance mode can be adopted according to the issue under study. The appropriate drop hammer 3 and appropriate pendulum hammer 24 are selected according to the characteristics (energy, rising edge time, amplitude, and the like) of disturbance stress waves, the heights of the drop hammer 3 and the pendulum hammer 24 are adjusted according to a required impact speed, and an electromagnetic chuck 1 and a brake valve 20 are controlled to release the drop hammer 3 and the pendulum hammer 24 to carry out impact disturbances.

Step 8: the dynamic loads are stopped when the key block in the roof is destroyed or falls, the action mechanism of impact disturbances leading to instability sliding of the key block is analyzed according to the recorded monitoring data, various data changes are observed, the change rule is analyzed, and a critical instability condition and precursor information are sought.

In a specific implementation, the test is over when the key block in the roof is destroyed or falls. The horizontal and vertical loads are decreased to zero by the hydraulic power system 32; the safety barriers 38 are opened, the vertical incident rod 5 and the backing plate 16 are disassembled, and the destroyed model sample is removed, the test device is cleaned, and all facilities are restored to the original states before the test.

In the static loading and dynamic disturbance process, the crack propagation rule of the key block and the instability sliding process after crack coalescence are observed in the whole process; and the action mechanism of impact disturbances leading to instability sliding of the key block is analyzed according to the recorded monitoring data, various data changes are observed, the change rule is analyzed, and the critical instability condition and precursor information are sought.

To sum up, the test device of the invention can be used to study key block in a roof falling under different disturbance conditions. Vertical blasting disturbances, horizontal blasting disturbances, and vertical-horizontal blasting disturbances to the key block in the roof can be simulated by changing the impact disturbance condition, and single impact disturbances and repeated cyclic impact disturbances can be simulated by changing the impact disturbance manner. The test device or model sample can also be slightly adjusted to be used to investigate the influence of water seepage on key block fall, the influence of interface roughness on key block fall, the influence of weak intercalations on key block fall, and the influence of stratified rock on key block fall.

The acoustic emission acquisition device in the response measurement and monitoring system can collect the micro-crack acoustic emission signal parameters to analyze the crack propagation rule and the rock damage evolution rule. The embedded or surface stress monitoring device can collect stress parameters of the model sample to analyze the rock stress evolution rule. The embedded or surface strain monitoring device can collect strain parameters of the model sample to analyze the rock strain evolution rule. The displacement monitoring device can collect displacement parameters of the model sample to analyze rock deformation and displacement rule. Meanwhile, all these parameters can be analyzed to figure out the variation trend and catastrophe development rule in the instability falling process of the key block and to extract precursor information of instability changes to lay a theoretical foundation for prevention and early warning of roof fall disasters.

## Claims

1. A fall test device for testing fall of a key block in a roof based on bidirectional static-dynamic loading, comprising an overall frame, a horizontal pressure loading system, a vertical pressure loading system, a horizontal pendulum-hammer impact disturbance system, a vertical drop-hammer impact disturbance system, an incident stress wave monitoring system and a response measurement and monitoring system, wherein:

the overall frame is used to provide a reactive force and accommodate a model sample in a lower space inside a steel frame body (14);
the horizontal pressure loading system is mounted on one side of the overall frame and is used to apply a horizontal static load to the model sample accommodated in the lower space inside the steel frame body (14);
the vertical pressure loading system is mounted on an upper portion of the overall frame and is used to apply a vertical static load to the model sample accommodated in the lower space inside the steel frame body (14) ;
the horizontal pendulum-hammer impact disturbance system is mounted on another side of the overall frame and applies a horizontal dynamic load to the model sample accommodated in the lower space inside the steel frame body (14) by hitting against a horizontal incident rod (19);

the vertical drop-hammer impact disturbance system is mounted on the upper portion of the overall frame and applies a vertical dynamic load to the model sample accommodated in the lower space inside the steel frame body (14) by hitting against a vertical incident rod (5);

the incident stress wave monitoring system is used to monitor incident stress waves on the horizontal incident rod (19) and the vertical incident rod (5); and

the response measurement and monitoring system is used to realize response monitoring by recording stress state data around the key block in the roof, acoustic emission data and surface strain field data of the model sample.

2. The fall test device for testing fall of a key block in a roof based on bidirectional static-dynamic loading according to Claim 1, wherein the overall frame comprises the steel frame body (14), two centering mandrels (17), a horizontal sliding rail (13), two movable cushion blocks (12), two vertical sliding rails (8) and two buffer devices (15);

the frame body (14) is formed by welding an upper frame, a lower frame and two side frames, the model sample is loaded in a lower space inside the frame body, and backing plates (16) are arranged on contact surfaces of the model sample with the horizontal pressure loading system, the horizontal pendulum-hammer impact disturbance system, the vertical pressure loading system and the vertical drop-hammer impact disturbance system;

the two centering mandrels (17) are mounted on one said side frame of the frame body (14) through threaded rods and are used to adjust a central position of the model sample;

the horizontal sliding rail (13) is arranged on the lower frame of the frame body (14), and the two movable cushion blocks (12) are arranged on the horizontal sliding rail (13) and are used to support a bottom of the model sample and guarantee that a horizontal stress of the model sample is uniform; and

the two vertical sliding rails (8) are respectively arranged on the side frames above the model sample, and the two buffer devices (15) are symmetrically arranged at lower ends of the corresponding vertical sliding rails, respectively.

3. The fall test device for testing fall of a key block in a roof based on bidirectional static-dynamic loading according to Claim 2, wherein the horizontal pressure loading system is mounted on one said side frame of the frame body (14), is disposed opposite to the centering mandrels (17), and comprises a horizontal hydraulic cylinder (10) and a horizontal loading plate (11), and the horizontal loading plate (11) is mounted on a pressure head of the horizontal hydraulic cylinder (10) and is used to apply the horizontal static load to the model sample uniformly; and the vertical pressure loading system is mounted on the upper frame of the frame body (14) and comprises two vertical hydraulic cylinders (6) and a vertical loading plate (7), the two vertical hydraulic cylinders (6) are symmetrically mounted on the upper frame, and the vertical loading plate (7) is mounted on pressure heads of the two vertical hydraulic cylinders (6), is used to apply the vertical static load to the model sample, and has two ends mounted on the vertical sliding rails (8) through pulleys.

4. The fall test device for testing fall of a key block in a roof based on bidirectional static-dynamic loading according to Claim 3, wherein the vertical drop-hammer impact disturbance system is mounted on the upper frame of the frame body (14) and comprises a support (4), an electromagnetic chuck (1), a drop hammer (3), a cross beam (2) and a vertical incident rod (5); the drop hammer (3) is mounted in a middle of the cross beam (2), the cross beam (2) is assembled on the support (4) and is able to slide upwards or downwards along the support (4) to allow the drop hammer (3) to freely and accurately hit against the vertical incident rod (5), and the vertical incident rod (5) penetrates through the upper frame of the frame body (14) and the vertical loading plate (7) to act on the backing plate (16) on an upper side of the model sample to apply the vertical hydraulic load to the model sample; and the electromagnetic chuck (1) is arranged at an upper end of the support (4) and is used to attract the drop hammer (3), and the drop hammer (3) is released by controlling a switch of the electromagnetic chuck (1).

5. The fall test device for testing fall of a key block in a roof based on bidirectional static-dynamic loading according to Claim 2, wherein the horizontal pendulum-hammer impact disturbance system is arranged on one side of the frame body (14), is located on a same side as the centering mandrels (17), and comprises a pedestal (23), a pendulum rod (22), a pendulum hammer (24), the horizontal incident rod (19), three sliding supports (18), an index dial (21) and a brake valve (20); the pendulum hammer (24) is mounted at one end of the pendulum rod (22), and another end of the pendulum rod (22) is mounted on the pedestal (23); the horizontal incident rod (19) penetrates through the corresponding side frame of the frame body (14) to contact with the backing plate (16) on one side of the model sample; the pendulum rod (22) is manually lifted, and the brake valve (20) is locked to fix a pendulum height, and then the brake valve (20) is unlocked to release the pendulum rod (22), so that the pendulum hammer (24) hits against the horizontal incident rod (19) to generate horizontally propagating impact stress waves to apply the horizontal dynamic load to the model sample; and the sliding support (18) supports the horizontal incident rod (19), and the index dial (21) is arranged at a top of the pedestal (23) and is used to quantitatively determine impact energy of the pendulum hammer.

6. The fall test device based for testing fall of a key block in a roof on bidirectional static-dynamic loading according to Claim 1, wherein the response measurement and monitoring system comprises one or more laser displacement meters (28), one or more strain acquisition instruments, one or more pressure cell sensors, one or more optical-fiber tensile stress sensors, one or more two-dimensional speckle strain measurement systems, one or more acoustic emission signal acquisition devices, and one or more BOTDR distributed optical-fiber strain testers (27).

7. A fall test method for testing fall of a key block in a roof based on bidirectional static-dynamic loading, comprising the following steps:

   Step 1: constructing an overall roadway model sample according to an investigated field condition and a similarity theory, and calculating a boundary force condition of the overall roadway model sample according to an original crustal stress;
   Step 2: placing the overall roadway model sample into an overall frame in a lower space inside a steel frame body (14);, and applying a horizontal static load and a vertical static load to the overall roadway model sample accommodated in the lower space inside the steel frame body (14) by a horizontal pressure loading system and a vertical pressure loading system according to the boundary force condition;
   Step 3: repeatedly and cyclically applying dynamic loads to the overall roadway model sample by a horizontal pendulum-hammer impact disturbance system and a vertical drop-hammer impact disturbance system, recording an incident stress waveform by an incident stress wave monitoring system, and recording stress state data around a key block in the roof, acoustic emission data and surface strain field data of the model sample by a response measurement and monitoring system; and observing a crack propagation rule, a formation process of the key block, an instability sliding process of the key block in the roof, and a roadway destroy mode under the dynamic disturbance;

   Step 4: stopping the application of the dynamic loads when the key block is destroyed or falls, and analyzing initial stress conditions of roadway and key block according to the recoded stress state data around the key block; and analyzing a crack propagation process of the key block according to the recorded incident stress waveform, acoustic emission data and surface strain field data;
   Step 5: constructing a key block model sample according to the investigated field condition and the similarity theory;
   Step 6: placing the key block model sample into the overall frame, and applying a horizontal static load and a vertical static load to the key block model sample by the horizontal pressure loading system and the vertical pressure loading system, with the initial stress condition of the key block obtained in Step 4 as a boundary force condition of the key block model sample;
   Step 7: repeatedly and cyclically applying dynamic loads to the key block model sample by the horizontal pendulum-hammer impact disturbance system and the vertical drop-hammer impact disturbance system, recording an incident waveform by the incident stress wave monitoring system, and recording various monitoring data by the response measurement and monitoring system; and observing a crack propagation rule of the key block and an instability sliding process after crack coalescence; and
   Step 8: stopping the application of the dynamic loads when the key block in the roof is destroyed or falls, analyzing an action mechanism of impact disturbances in leading to instability sliding of the key block according to the recorded monitoring data, observing data changes, analyzing a change rule, and seeking a critical instability condition and precursor information of the key block.

8. The key roof block fall test method based on bidirectional static-dynamic loading according to Claim 7, wherein the response measurement and monitoring system comprises one or more laser displacement meters (28), one or more strain acquisition instruments, one or more pressure cell sensors, one or more optical-fiber tensile stress sensors, one or more two-dimensional speckle strain measurement systems, one or more acoustic emission signal acquisition devices, and one or more BOTDR distributed optical-fiber strain testers (28).

9. The fall test method for testing fall of a key block in a roof based on bidirectional static-dynamic loading according to Claim 8, wherein the construction of the overall roadway model sample in Step 1 specifically comprises:

Step 1.1: defining an appropriate simulation scope according to the investigated field condition, determining a dimension similarity ratio, a strength similarity ratio, a density similarity ratio and a stress similarity ratio according to the similarity theory, and calculating the dimension, density and strength of the test model;

Step 1.2: selecting an appropriate similar material according to the calculated model density and model strength, and selecting an optimum similar material formula and curing method by multiple orthogonal experimental comparisons;

Step 1.3: manufacturing the overall roadway model sample according to the obtained model dimension and similar material formula, wherein the specific manufacturing process includes: ① erecting a square model, and disposing a roadway partition in a middle of the model; ② preparing and pouring similar material slurry according to the selected optimum similar material formula; ③ inserting thin iron sheets into a roadway roof according to a pre-determined shape and dimension of the key block to pre-form roof cracks; ④ embedding the pressure cell sensors around the key block; ⑤ curing a similar model according to the optimum curing method, and pulling the thin iron sheet out of the roadway roof after initial setting is finished; and ⑥ continuing to cure the similar model to an expected strength; and

Step 1.4: calculating the boundary force condition of the overall roadway model sample according to the original crustal stress and the stress similarity ratio.

10. The fall test method for testing fall of a key block in a roof based on bidirectional static-dynamic loading according to Claim 9, wherein the construction of the key block model sample in Step 5 specifically comprises:

Step 5.1: scaling up the dimension similarity ratio on the basis of the similarity theory, simulating a local scope of the key block, and determining an appropriate key block model sample dimension; and

Step 5.2: manufacturing the trapezoidal key block model sample according to the key block model sample dimension, wherein the specific manufacturing process includes: ① erecting a template, and prearranging two non-through thin iron sheets at pre-determined positions; ② preparing and pouring similar material slurry according to the selected optimum similar material formula; ③ embedding the optical-fiber tensile stress sensors and the pressure cell sensors around the key block, embedding a distributed optical fiber in a bottom of the model, consolidating the similar material slurry by vibration, and flattening a surface; ④ curing the similar material slurry in an appropriate environment according to the optimum curing method; (5) pulling out the thin iron sheet used for pre-cracking after the similar material is initially set; and ⑥ continuing to cure the similar material to an expected strength.

**Patentansprüche**

1. Fallprüfgerät zur Fallprüfung eines Hauptdachbausteins auf bidirektionale statisch-dynamische Belastung, umfassend einen Gesamtrahmen, ein horizontales Druckbelastungssystem, ein vertikales Druckbelastungssystem, ein horizontales Pendelhammeraufprallstörsystem, ein vertikales Fallhammeraufprallstörsystem, ein Einfallspannungswellenüberwachungssystem und ein Reaktionsmess- und -überwachungssystem, wobei:

der Gesamtrahmen zum Versehen einer reaktiven Kraft und zur Aufnahme einer Musterprobe in einen unteren Bereich innerhalb eines Stahlrahmenkörpers (14) benutzt wird;
das horizontale Druckbelastungssystem auf eine Seite des Gesamtrahmens montiert ist und zum Aufbringen einer horizontalen statischen Belastung auf die Musterprobe benutzt wird, die in dem unteren Bereich innerhalb des Stahlrahmenkörpers (14) aufgenommen ist;
das vertikale Druckbelastungssystem auf einem oberen Teil des Gesamtrahmens montiert ist und zum Aufbringen einer vertikalen statischen Belastung auf die Musterprobe benutzt wird, die in dem unteren Bereich innerhalb des Stahlrahmenkörpers (14) aufgenommen ist;
das horizontale Pendelhammeraufprallstörsystem auf einer anderen Seite des Gesamtrahmens montiert ist und eine horizontale dynamische Belastung auf die Musterprobe durch Aufprall gegen eine horizontale Einfallstange (19) aufbringt, wobei die Musterprobe in dem unteren Bereich innerhalb eines Stahlrahmenkörpers (14) aufgenommen ist;
das vertikale Pendelhammeraufprallstörsystem auf dem oberen Teil des Gesamtrahmens montiert ist und eine vertikale dynamischen Belastung auf die Musterprobe durch Aufprall gegen eine vertikale Einfallstange (5) aufbringt, wobei die Musterprobe in dem unteren Bereich innerhalb des Stahlrahmenkörpers (14) aufgenommen ist;
das Einfallspannungswellenüberwachungssystem zur Überwachung von einfallenden Spannungswellen auf die horizontale Einfallstange (19) und auf die vertikale Einfallstange (5) benutzt wird; und

das Reaktionsmess- und -überwachungssystem zur Durchführung einer Reaktionsüberwachung durch Speicherung von Spannungszustandsdaten um das Hauptdachbaustein, von Schallemissionsdaten und von Oberflächendehnungsfelddaten der Musterprobe benutzt wird.

2. Fallprüfgerät zur Fallprüfung eines Hauptdachbausteins auf bidirektionale statisch-dynamische Belastung nach Anspruch 1, wobei der Gesamtrahmen den Stahlrahmenkörper (14), zwei Zentrierdorne (17), eine horizontale Laufschiene (13), zwei bewegbare Kissenblöcke (12), zwei vertikale Laufschienen (8) und zwei Puffervorrichtungen (15) umfasst;

der Rahmenkörper (14) durch das Schweißen eines oberen Rahmen, eines unteren Rahmen und von zwei Seitenrahmen gebildet ist, die Musterprobe in einem unteren Bereich innerhalb des Rahmenkörpers (14) geladen ist, und Stützplatten (16) auf Kontaktflächen der Musterprobe mit dem horizontalen Druckbelastungssystem, dem vertikalen Druckbelastungssystem, dem horizontalen Pendelhammeraufprallstörsystem, und dem vertikales Fallhammeraufprallstörsystem angeordnet sind;

die zwei Zentrierdorne (17) auf einem dieser Seitenrahmen des Rahmenkörpers (14) über Gewindestange montiert sind, und zur Einstellung einer zentralen Position der Musterprobe benutzt werden;

die horizontale Laufschiene (13) auf den unteren Rahmen des Rahmenkörpers (14) angeordnet ist , und die zwei bewegbaren Kissenblöcke (12) auf der horizontalen Laufschiene (13) angeordnet sind und zur Unterstützung eines Bodens der Musterprobe benutzt werden, und gewährleisten, dass eine horizontale Spannung der Musterprobe gleichmäßig ist; und

die zwei vertikalen Laufschienen (8) jeweils auf den Seitenrahmen über der Musterprobe angeordnet sind, und die zwei Puffervorrichtungen (15) jeweils symmetrisch auf unteren Enden der entsprechenden vertikalen Laufschienen (8) angeordnet sind.

3. Fallprüfgerät zur Fallprüfung eines Hauptdachbausteins auf bidirektionale statisch-dynamische Belastung nach Anspruch 2, wobei das horizontale Druckbelastungssystem auf diesem Seitenrahmen des Rahmenkörpers (14) montiert ist, gegenüber den Zentrierdornen (17) angeordnet ist, und einen horizontalen Hydraulikzylinder (10) und eine horizontale Belastungsplatte (11) umfasst, und die horizontale Belastungsplatte (11) auf einem Druckkopf des horizontalen Hydraulikzylinders (10) montiert ist, und zur gleichmäßigen Aufbringung der horizontalen statischen Belastung auf die Musterprobe benutzt wird; und

das vertikale Druckbelastungssystem auf dem oberen Rahmen des Rahmenkörpers (14) montiert ist und zwei vertikale Hydraulikzylinder (6) und eine vertikale Belastungsplatte (7) umfasst, die zwei vertikalen Hydraulikzylinder symmetrisch auf dem oberen Rahmen montiert sind, und die vertikale Belastungsplatte (7) auf Druckköpfen der zwei vertikalen Hydraulikzylinder (6) montiert ist, und zur gleichmäßigen Aufbringung der vertikalen statischen Belastung auf die Musterprobe benutzt wird, und zwei auf den vertikalen Laufschienen (8) über Riemenscheiben montierten Enden aufweist.

4. Fallprüfgerät zur Fallprüfung eines Hauptdachbausteins auf bidirektionale statisch-dynamische Belastung nach Anspruch 3, wobei das vertikales Fallhammeraufprallstörsystem auf dem oberen Rahmen des Rahmenkörpers (14) montiert ist, und einen Halter (4), ein elektromagnetisches Spannfutter (1), einen Fallhammer (3), einen Querträger (2), und eine vertikale Einfallstange (5) umfasst; der Fallhammer (3) in der Mitte des Querträgers (2) montiert ist; der Querträger (2) auf dem Halter zusammengestellt ist und fähig ist, aufwärts oder abwärts den Halter (4) entlang zu gleiten, damit der Fallhammer frei und genau gegen die vertikale Einfallstange (5) aufprallen kann, und die vertikale Einfallstange (5) den oberen Rahmen des Rahmenkörpers (14) und die vertikale Belastungsplatte (7) durchdringt, damit auf die Stützplatte (16) an der oberen Seite der Musterprobe zur Aufbringung der vertikalen hydraulischen Belastung auf die Musterprobe eingewirkt wird; und das elektromagnetische Spannfutter (1) an einem Oberende des Halters (4) angeordnet ist, und zur Anziehung des Fallhammers (3) benutzt wird, und der Fallhammer (3) durch Steuerung eines Schalters des Spannfutters (1) gelöst wird.

5. Fallprüfgerät zur Fallprüfung eines Hauptdachbausteins auf bidirektionale statisch-dynamische Belastung nach Anspruch 2, wobei das horizontale Pendelhammeraufprallstörsystem auf einer Seite des Rahmenkörpers (14) angeordnet ist, auf der gleiche Seite wie diese der Zentrierdorne (17) gelegen ist, und einen Sockel (23), eine Pendelstange (22), einen Pendelhammer (24), die horizontale Einfallstange (19), drei Gleitstützen (18), eine Zeigerskala (21) und ein Bremsventil (20) umfasst; der Pendelhammer (24) auf einem Ende der Pendelstange (22) montiert ist, und ein anderes Ende der Pendelstange (22) auf dem Sockel (23) montiert ist; die horizontale Einfallstange (19) den entsprechenden Seitenrahmen des Rahmenkörpers (14) zur Berührung der Stützplatte (16) auf einer Seite der Musterprobe durchdringt; die Pendelstange (22) manuell aufgehoben wird, und das Bremsventil (20) zur Bestimmung einer Pendelhöhe verriegelt wird, und das Bremsventil (20) dann zur Lösung der Pendelstange (22) entriegelt wird, sodass der Pendelhammer (24) gegen die horizontale Einfallstange (19) zur Erzeugung von horizontal fortpflanzenden Aufprallspannungswellen aufprallt, damit die horizontale dynamische Belastung auf die Musterprobe aufgebracht wird; und die Gleitstütze (18) die horizontale Einfallstange (19) unterstützt, und die Zeigerskala (21) an der Oberseite des Sockels (23) angeordnet ist, und zur mengenmäßigen Bestimmung der Aufprallenergie der Pendelhammer benutzt wird.

6. Fallprüfgerät zur Fallprüfung eines Hauptdachbausteins auf bidirektionale statisch-dynamische Belastung nach Anspruch 1, wobei das Reaktionsmess- und - überwachungssystem ein oder mehrere Laser-Verschiebungsmessgeräte (28), ein oder mehrere Dehnungserfassungsinstrumente, einen oder mehrere Druckzellensensoren, einen oder mehrere Lichtleitfaserzugspannungssensoren, ein oder mehrere zweidimensionale Speckledehnungsmesssysteme, ein oder mehrere Schallemissionssignalerfassungsgeräte, und einen oder mehrere BOTDR-Dehnungsprüfer mit verteilten Lichtleitfasern (27) umfasst.

7. Fallprüfverfahren zur Fallprüfung eines Hauptdachbausteins auf bidirektionale statisch-dynamische Belastung, das die folgenden Schritte umfasst:

Schritt 1 : Herstellung einer Gesamtfahrbahnmusterprobe nach einer untersuchten Feldbedingung und einer Ähnlichkeitstheorie, und Berechnung einer Kraft-Randbedingung der Gesamtfahrbahnmusterprobe nach einer originalen Krustspannung;

Schritt 2 : Unterbringung der Gesamtfahrbahnmusterprobe in einen Gesamtrahmen in einen unteren Bereich innerhalb eines Stahlrahmenkörpers (14); und Aufbringung einer horizontalen statischen Belastung und einer vertikalen statischen Belastung auf die Gesamtfahrbahnmusterprobe, die in den unteren Bereich innerhalb des Stahlrahmenkörpers (14) aufgenommen ist, mittels eines horizontalen Druckbelastungssystems und eines vertikalen Druckbelastungssystems gemäß der Kraft-Randbedingung;

Schritt 3: wiederholtes und zyklisches Aufbringen von dynamischen Belastungen auf die Gesamtfahrbahnmusterprobe mittels eines horizontalen Pendelhammeraufprallstörsystems und eines vertikalen Fallhammeraufprallstörsystems, Speicherung einer einfallenden Spannungswellenform mittels eines Einfallspannungswellenüberwachungssystems, und Speicherung von Spannungszustandsdaten um ein Hauptdachbaustein, von Schallemissionsdaten, und von Oberflächendehnungsfelddaten der Musterprobe mittels eines Reaktionsmess- und -überwachungssystems; und Beobachtung einer Rissfortpflanzungsregel, eines Entstehungsprozesses des Hauptbausteins, eines Instabilitätsgleitprozesses des Hauptdachbausteins, und eines Fahrbahnzerstörmodus bei der dynamischen Störung;

Schritt 4 : Aufhalten der Aufbringung der dynamischen Belastungen, wenn das Hauptbaustein zerstört ist oder fällt, und Analyse der Anfangsspannungsbedingungen der Fahrbahn und Hauptbausteins gemäß den gespeicherten Spannungszustandsdaten um das Hauptdachbaustein; und Analyse eines Rissfortpflanzungsprozesses des Hauptbausteins gemäß der gespeicherten einfallenden Spannungswellenform, den Schallemissionsdaten und den Oberflächendehnungsfelddaten;

Schritt 5 : Herstellung einer Hauptbausteinmusterprobe nach der untersuchten Feldbedingung und der Ähnlichkeitstheorie;

Schritt 6 : Unterbringung der Hauptbausteinmusterprobe in den Gesamtrahmen; und Aufbringung einer horizontalen statischen Belastung und einer vertikalen statischen Belastung auf die Hauptsteinmusterprobe mittels des horizontalen Druckbelastungssystems und des vertikalen Druckbelastungssystems, mit der im Schritt 4 erhaltenen Anfangsspannungsbedingung des Hauptbausteins als eine Kraft-Randbedingung der Hauptbausteinmusterprobe;

Schritt 7 : wiederholtes und zyklisches Aufbringen von dynamischen Belastungen auf die Hauptbausteinmusterprobe mittels des horizontalen Pendelhammeraufprallstörsystems und des vertikalen Fallhammeraufprallstörsystems, Speicherung einer einfallenden Spannungswellenform mittels des Einfallspannungswellenüberwachungssystems, und Speicherung verschiedener Überwachungsdaten mittels des Reaktionsmess- und -überwachungssystems; und Beobachtung einer Rissfortpflanzungsregel des Hauptbausteins, und eines Instabilitätsgleitprozesses nach Rissenkoaleszenz; und Schritt 8 : Aufhalten der Aufbringung der dynamischen Belastungen, wenn das Hauptdachbaustein zerstört ist oder fällt, und Analyse eines Aktionsmechanismus der Aufprallstörungen, die zum Instabilitätsgleiten des Hauptbausteins gemäß den gespeicherten Überwachungsdaten führen; und Beobachtung von Datenänderungen, Analyse einer Änderungsregel, und Suchen einer kritischen Instabilitätsbedingung und von Vorläuferinformationen des Hauptbausteins.

8. Fallprüfverfahren zur Fallprüfung eines Hauptdachbausteins auf bidirektionale statisch-dynamische Belastung nach Anspruch 7, wobei das Reaktionsmess- und - überwachungssystem ein oder mehrere Laser-Verschiebungsmessgeräte (28), ein oder mehrere Dehnungserfassungsinstrumente, einen oder mehrere Druckzellensensoren, einen oder mehrere Lichtleitfaserzugspannungssensoren, ein oder mehrere zweidimensionale Speckledehnungsmesssysteme, ein oder mehrere Schallemissionssignalerfassungsgeräte, und einen oder mehrere BOTDR-Dehnungsprüfer mit verteilten Lichtleitfasern umfasst.

9. Fallprüfverfahren zur Fallprüfung eines Hauptdachbausteins auf bidirektionale statisch-dynamische Belastung nach Anspruch 8, wobei die Herstellung der Gesamtfahrbahnmusterprobe im Schritt 1 insbesondere umfasst:

Schritt 1.1 : Bestimmung eines geeigneten Simulationsbereichs gemäß der untersuchten Feldbedingung, Ermittlung eines Dimensionsähnlichkeitsverhältnisses, eines Festigkeitsähnlichkeitsverhältnisses, eines Dichteähnlichkeitsverhältnisses und eines Spannungsähnlichkeitsverhältnisses gemäß der Ähnlichkeitstheorie, und Berechnung der Dimension, der Dichte und der Festigkeit des Prüfmusters;

Schritt 1.2 : Auswahl eines geeigneten ähnlichen Materials gemäß den berechneten Musterdichte und Musterfestigkeit, und Auswahl eines optimalen ähnlichen Materials und Härtungsverfahrens durch vielfache orthogonale experimentelle Vergleiche;

Schritt 1.3 : Herstellung der Gesamtfahrbahnmusterprobe nach der erhaltenen Musterdimension und ähnlichen Materialformel, wobei das spezifische Verfahren umfasst: (1) Errichtung eines quadratischen Musters, und Anordnung einer Fahrbahnverteilung in der Mitte des Musters; (2) Vorbereiten und Gießen eines ähnlichen Materialschlammes gemäß der ausgewählten optimalen ähnlichen Materialformel; (3) Einsetzen dünner Eisenbleche in ein Fahrbahndach gemäß einer vorbestimmten Form und Dimension des Hauptbausteins zur Vorformung von Dachrissen; (4) Einbetten der Druckzellensensoren um das Hauptbaustein; (5) Härten eines ähnlichen Musters gemäß dem optimalen Härtungsverfahren, und Ziehen des dünnen Eisenbleches aus dem Fahrbahndach, wenn die Anfangshärtung beendet ist; und (6) Fortsetzen der Härtung des ähnlichen Musters bis zu einer erwarteten Festigkeit; und

Schritt 1.4: Berechnen der Kraftrandbedingung der Gesamtfahrbahnmusterprobe gemäß der originalen Krustspannung und dem Spannungsähnlichkeitsverhältnis.

10. Fallprüfverfahren zur Fallprüfung eines Hauptdachbausteins auf bidirektionale statisch-dynamische Belastung nach Anspruch 9, wobei die Herstellung der Hauptbausteinmusterprobe im Schritt 5 insbesondere umfasst:

Schritt 5.1 : Vergrößerung der Dimensionsähnlichkeitsverhältnisses auf der Basis der Ähnlichkeitstheorie, Simulierung eines örtlichen Umfangs des Hauptbausteins, und Bestimmung einer geeigneten Hauptbausteinmusterprobedimension; und

Schritt 5.2 : Herstellung der trapezförmigen Hauptbausteinmusterprobe gemäß der Hauptdachsteinmusterprobedimension, wobei das spezifische Herstellungsverfahren umfasst: (1) Errichtung einer Schablone, und Voranordnung von zwei nicht durchgehenden dünnen Blechen an vorbestimmten Positionen; (2) Vorbereiten und Gießen eines ähnlichen Materialschlammes gemäß der ausgewählten optimalen ähnlichen Materialformel; (3) Einbetten der Lichtleitfaserzugspannungssensoren und der Druckzellensensoren um das Hauptbaustein, Einbetten einer verteilten Lichtleitfaser in einen Boden des Musters, Festigung des ähnlichen Materialschlammes durch Schwingung, und Glätten einer Oberfläche; (4) Härten des ähnlichen Materialschlammes in einer angepassten Umgebung gemäß dem optimalen Härtungsverfahren, (5) Herausziehen des dünnen Eisenbleches, das zur Vor-Rissbildung benutzt wird, nachdem das ähnliche Material anfänglich gehärtet wurde; und (6) Fortsetzen der Härtung des ähnlichen Musters bis zu einer erwarteten Festigkeit.

**Revendications**

1. Appareil de test de chute destiné à tester la chute d'un bloc clé dans un toit, basé sur une charge bidirectionnelle statique-dynamique, comprenant un châssis général, un système de charge à pression horizontale, un système de charge à pression verticale, un système de perturbation par impact horizontal au moyen d'un marteau pendulaire, un système de perturbation par impact vertical au moyen d'un marteau pilon, un système de surveillance d'onde incidente de contrainte, dans lequel :

le châssis général est utilisé pour procurer une force réactionnelle et pour loger un échantillon modèle dans un espace inférieur à l'intérieur d'un corps de châssis en acier (14) ;
le système de charge à pression horizontale est monté sur un côté du châssis général et est utilisé pour appliquer une charge statique horizontale à l'échantillon modèle logé dans l'espace inférieur à l'intérieur du corps de châssis en acier (14) ;

le système de charge à pression verticale est monté sur une partie supérieure du châssis général et est utilisé pour appliquer une charge statique verticale à l'échantillon modèle logé dans l'espace inférieur à l'intérieur du corps de châssis en acier (14) ;

le système de perturbation par impact horizontal au moyen d'un marteau pendulaire est monté sur un autre côté du châssis général et applique une charge dynamique horizontale sur l'échantillon modèle logé dans l'espace inférieur à l'intérieur du corps de châssis en acier (14) en heurtant un barre d'incidence horizontale (19) ;

le système de perturbation par impact vertical au moyen d'un marteau pilon est monté sur la partie supérieure du châssis général et applique une charge dynamique verticale sur l'échantillon modèle logé dans l'espace inférieur à l'intérieur du corps de châssis en acier (14) en heurtant un barre d'incidence verticale (5) ; et

le système de surveillance d'onde incidente de contrainte est utilisé pour surveiller des ondes de contrainte sur la barre d'incidence horizontale (19) et sur la barre d'incidence verticale (5) ; et

le système de mesure de réponse et de surveillance est utilisé pour réaliser une surveillance de réponse en enregistrant des données d'état de contrainte autour du bloc clé dans le toit, des données d'émission acoustique et des données de champ de déformation de l'échantillon modèle.

2. Appareil de test de chute destiné à tester la chute d'un bloc clé dans un toit, basé sur une charge bidirectionnelle statique-dynamique selon la revendication 1, dans lequel le châssis général comprend le corps de châssis en acier (14), deux mandrins de centrage (17), un rail de guidage horizontal (13), deux blocs d'amortissement mobiles (12), deux rails de guidage verticaux, et deux dispositifs tampons (15) ;

le corps de châssis (14) est formé en soudant un châssis supérieur, un châssis inférieur et deux châssis latéraux, l'échantillon modèle est chargé dans un espace inférieur à l'intérieur du corps de châssis, et des plaques d'appui (16) sont disposées sur des surfaces de contact de l'échantillon modèle avec le système de charge à pression horizontale, le système de charge à pression verticale, le système de perturbation par impact horizontal au moyen d'un marteau pendulaire, et le système de perturbation par impact vertical au moyen d'un marteau pilon ;

les deux mandrins de centrage (17) sont montés sur ledit châssis latéral du corps de châssis (14) par l'intermédiaire de tiges filetées et sont utilisés pour ajuster une position centrale de l'échantillon modèle ;

le rail de guidage horizontal (13) est disposé sur le châssis inférieur du corps de châssis (14), et les deux châssis d'amortissement mobiles (12) sont disposés sur le rail de guidage horizontal (13) et sont utilisés pour supporter un fonds de l'échantillon modèle et pour garantir qu'une contrainte horizontale de l'échantillon modèle soit uniforme ; et

les deux rails de guidage verticaux (8) sont respectivement disposés sur les châssis latéraux au-dessus de l'échantillon modèle, et les deux dispositifs tampons (15) sont disposés respectivement de façon symétrique aux extrémités inférieures des rails de guidage verticaux correspondants.

3. Appareil de test de chute destiné à tester la chute d'un bloc clé dans un toit, basé sur une charge bidirectionnelle statique-dynamique selon la revendication 2, dans lequel le système de charge à pression horizontale est monté sur ledit un châssis latéral du corps de châssis (14), est disposé en face des mandrins de centrage (17), et comprend un vérin hydraulique horizontal (10) et une plaque de charge horizontale (11), et la plaque de charge horizontale (11) est montée sur une tête de pression du vérin hydraulique horizontal (10) et est utilisée pour appliquer uniformément la charge statique horizontale sur l'échantillon modèle ; et

le système de charge à pression verticale est monté sur le châssis supérieur du corps de châssis (14) et comprend deux vérins hydrauliques verticaux (6) une plaque de charge verticale (7), les deux vérins hydrauliques verticaux (6) sont montés symétriquement sur le châssis supérieur, et la plaque de charge verticale (7) est montée sur des têtes de pression des deux vérins hydrauliques verticaux (6), et est utilisée pour appliquer la charge statique verticale sur l'échantillon modèle, et présente deux extrémités montées sur des rails de guidage verticaux (8) par l'intermédiaire de poulies.

4. Appareil de test de chute destiné à tester la chute d'un bloc clé dans un toit, basé sur une charge bidirectionnelle statique-dynamique selon la revendication 3, dans lequel le système de perturbation par impact vertical au moyen d'un marteau pilon, est monté sur le châssis supérieur du corps de châssis (14) et comprend un support (4), un mandrin électromagnétique (1), un marteau pilon (3), une poutre transversale (2), et une barre d'incidence verticale (5) ; le marteau pilon (3) est monté au milieu de la poutre transversale (2), la poutre transversale (2) est assemblée sur le support (4) et est apte à coulisser vers le haut ou vers le bas le long du support (4) afin de permettre au marteau pilon (3) de heurter librement et précisément la barre d'incidence verticale (5), et la barre d'incidence verticale (58) pénètre le châssis supérieur du corps de châssis (14) et la plaque de charge verticale (7) afin d'agir sur la plaque d'appui (16) au côté supérieur de l'échantillon modèle pour appliquer la charge hydraulique verticale ; et le mandrin électromagnétique (1) est disposé sur une extrémité supérieure du support (4) et est utilisé pour attirer la marteau pilon (3), et le marteau pilon (3) est lâché par commande d'un commutateur du mandrin électromagnétique (1).

5. Appareil de test de chute destiné à tester la chute d'un bloc clé dans un toit, basé sur une charge bidirectionnelle statique-dynamique selon la revendication 2, dans lequel le système de perturbation par impact horizontal au moyen d'un marteau pendulaire est disposé sur un côté du corps de châssis (14), est situé d'un même côté des mandrins de centrage (17), et comprend un socle (23), une barre de pendule (22), un marteau pendulaire (24), la barre d'incidence horizontale (19), trois supports de guidage (18), un cadran d'indices (21), et une soupape de frein (20) ; le marteau pendulaire (24) est monté sur une extrémité de la barre de pendule (22), et une autre extrémité de la barre de pendule (22) est montée sur le socle (23) ; la barre d'incidence horizontale (19) pénètre le châssis latéral correspondant du corps de châssis (14) afin de se mettre en contact avec la plaque d'appui (16) sur un côté de l'échantillon modèle ; la barre à pendule (22) est levée manuellement, et la soupape de frein (20) est verrouillée afin d'établir une hauteur de pendule, et ensuite la soupape de frein (20) est déverrouillée afin de lâcher la barre de pendule de sorte que le marteau pendulaire (24) heurte la barre d'incidence horizontale (19) afin de générer des ondes de contrainte d'impact se propageant horizontalement pour appliquer la charge dynamique à l'échantillon modèle ; et le support de guidage (18) supporte la barre d'incidence horizontale (19), et le cadran d'indices (21) est disposé à la partie supérieure du socle (23) et est utilisé afin de déterminer quantitativement l'énergie d'impact du marteau pendulaire.

6. Appareil de test de chute destiné à tester la chute d'un bloc clé dans un toit, basé sur une charge bidirectionnelle statique-dynamique selon la revendication 1, dans lequel le système de mesure et de surveillance de réponse comprend un ou plusieurs compteurs laser de déplacement (28), un ou plusieurs instruments d'acquisition de déformation, un ou plusieurs capteurs cellulaires de pression, un ou plusieurs capteurs de contrainte de traction de fibre optique, un ou plusieurs systèmes de mesure de déformation bidimensionnelle à chatoiement, un ou plusieurs dispositifs d'acquisition de signaux d'émission acoustique, et un ou plusieurs appareils de contrôle de fibre optique distribuée BOTDR (27).

7. Procédé de test de chute destiné à tester la chute d'un bloc clé dans un toit, basé sur une charge bidirectionnelle statique-dynamique, comprenant les étapes suivantes :

   - étape 1 : fabriquer un échantillon modèle de route générale selon une condition de terrain investigué et une théorie de similitude, et calculer une condition limite de forces de l'échantillon modèle de route générale selon une contrainte de croûte terrestre originale ;
   - étape 2 : placer d'échantillon modèle de route générale dans un châssis général dans un espace inférieur à l'intérieur d'un corps de châssis en acier (14); et appliquer une charge statique horizontale et une charge statique verticale sur l'échantillon modèle de route générale logé dans l'espace inférieur à l'intérieur du corps de châssis en acier par un système de charge à pression horizontale et un système de charge à pression verticale selon la condition limite de force ;
   - étape 3 : appliquer à répétition et de façon cyclique des charges dynamiques à l'échantillon modèle au moyen d'un système de perturbation par impact horizontal au moyen d'un marteau pendulaire et au moyen d'un système de perturbation par impact vertical au moyen d'un marteau pilon, enregistrer une forme d'onde incidente de contrainte au moyen d'un système de surveillance d'onde incidente de contrainte, et enregistrer des données d'état de contraintes autour d'un bloc clé dans le toit, des données d'émission acoustique et des données de champ de déformation de surface de l'échantillon modèle au moyen d'un système de mesure et de surveillance de réponse ; et observer une loi de propagation de fissures, un processus de formation du bloc clé, un processus de glissement par instabilité du bloc clé dans le toit, et un mode de destruction de route dû à la perturbation dynamique ;
   - étape 4 : arrêter l'application de charges dynamiques lorsque le bloc clé est détruit ou chute, et analyser les conditions de contrainte initiales de la route et du bloc clé selon des données d'état de contrainte autour du bloc clé ; et analyser un processus de propagation de fissures du bloc clé selon la forme d'onde incidente de contrainte, les données d'émission acoustique et les données de champ de déformation de surface enregistrées ;

- étape 5 : fabriquer un échantillon modèle de bloc clé selon les conditions de champ investigué et la théorie de similitude ;
- étape 6 : placer l'échantillon modèle de bloc clé dans le châssis général en acier ; et appliquer une charge statique horizontale et une charge statique verticale sur l'échantillon modèle de bloc clé au moyen du système de charge à pression horizontale et du système de charge à pression verticale, avec la condition de contrainte initiale du bloc clé obtenue à l'étape 4 en tant que condition limite de force de l'échantillon modèle de bloc clé ;
- étape 7: appliquer à répétition et de façon cyclique des charges dynamiques à l'échantillon modèle de bloc clé au moyen du système de perturbation par impact horizontal au moyen d'un marteau pendulaire et au moyen du système de perturbation par impact vertical au moyen d'un marteau pilon, enregistrer une forme d'onde incidente de contrainte au moyen du système de surveillance d'onde incidente de contrainte, et enregistrer diverses données de surveillance au moyen du système de mesure et de surveillance de réponse ; et observer une loi de propagation de fissures du bloc clé et un processus de glissement par instabilité du bloc clé après coalescence de fissures ;
- étape 8 : arrêter l'application des charges dynamiques lorsque le bloc clé dans le toit est détruit ou chute, et analyser un mécanisme d'action des perturbations d'impact conduisant à un glissement par instabilité du bloc clé selon les données de surveillance ; observer des changements de données, analyser une loi de changement, et rechercher une condition d'instabilité critique et des informations précurseuses du bloc clé.

8. Procédé de test de chute destiné à tester la chute d'un bloc clé dans un toit, basé sur une charge bidirectionnelle statique-dynamique selon la revendication 7, dans lequel le système le système de mesure et de surveillance de réponse comprend un ou plusieurs compteurs laser de déplacement (28), un ou plusieurs instruments d'acquisition de déformation, un ou plusieurs capteurs cellulaires de pression, un ou plusieurs capteurs de contrainte de traction de fibre optique, un ou plusieurs systèmes de mesure de déformation bidimensionnelle à chatoiement, un ou plusieurs dispositifs d'acquisition de signaux d'émission acoustique, et un ou plusieurs appareils de contrôle de fibre optique distribuée BOTDR (27).

9. Procédé de test de chute destiné à tester la chute d'un bloc clé dans un toit, basé sur une charge bidirectionnelle statique-dynamique selon la revendication 8, dans lequel la fabrication de l'échantillon modèle de route générale à l'étape 1 comprend spécifiquement :

- étape 1.1 : définir un domaine approprié de simulation selon la condition de terrain investigué, déterminer un rapport de similitude dimensionnel, un rapport de similitude de forces, un rapport de similitude de densités et un rapport de similitude de contraintes selon la théorie des similitudes, et calculer les dimensions, la densité et la résistance du modèle de test ;
- étape 1.2 : sélectionner un matériau similaire approprié selon la densité de modèle et la résistance de modèle calculées, et sélectionner une formule optimale et un procédé optimal de matériau similaire par des comparaisons expérimentales orthogonales multiples ;
- étape 1.3 : fabrication de l'échantillon modèle de route générale selon les dimensions de modèle et la formule de matériau similaire, où le procédé de fabrication spécifique comporte : 1) fabriquer un modèle carré, et disposer une partition de route au milieu du modèle ; 2) préparer et verser un coulis de matériau similaire selon la formule optimale sélectionnée du matériau similaire ; 3) insérer des feuilles de fer dans un toit de route selon une forme et des dimensions prédéterminés du bloc clé afin de préformer des fissures de toit ; 4) incorporer des capteurs cellulaires de pression autour du bloc clé ; 5) durcir un modèle similaire selon le procédé de durcissement optimal, retirer la feuille fine en fer du toit de route après un premier durcissement ; et 6) poursuivre le durcissement du modèle similaire jusqu'à une résistance et
- étape 1.4 : calculer la condition de force limite de l'échantillon modèle de route générale selon la contrainte originale d'écorce terrestre et le rapport de similarité de contraintes.

10. Procédé de test de chute destiné à tester la chute d'un bloc clé dans un toit, basé sur une charge bidirectionnelle statique-dynamique selon la revendication 9, dans lequel la fabrication de l'échantillon de bloc clé à l'étape 5 comprend spécifiquement :

- étape 5.1 : augmenter le rapport de similarité dimensionnel sut base de la théorie des similitudes, simuler une étendue locale du bloc clé, et déterminer des dimensions d'échantillon modèle de bloc clé appropriées ; et
- étape 5.2 : fabriquer l'échantillon modèle de bloc clé trapézoïdal selon les dimensions de l'échantillon modèle de bloc clé, où le procédé spécifique de fabrication comporte : 1) fabriquer un gabarit, et prédisposer deux fines feuilles en fer non perforées à des positions prédéterminées ; 2) préparer et verser un coulis de matériau similaire selon la formule optimale sélectionnée du matériau similaire ; 3) incorporer les capteurs de contraintes de traction à base de fibres optiques et les capteurs cellulaires de pression au tour du bloc clé, incorporer une fibre optique distribuée dans le bas du modèle, consolider le coulis du matériau similaire au moyen de vibrations, et aplanir une surface ; 4) durcir le coulis du matériau similaire dans un environnement approprié selon le procédé optimal de durcissement ; 5) retirer la fine feuille de fer utilisée pour la préfissuration après durcissement initial du matériau similaire; et 6) continuer le durcissement du matériau similaire jusqu'à une résistance prévue.

FIG.1

FIG.2

FIG.3

FIG4

EP 3 712 589 B1

24

surrounding rock

key block

surrounding rock

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107817119
- CN 10676948